# EUROPEAN PATENT APPLICATION

(11) **EP 1 529 441 A2**
(43) Date of publication of application: **11.05.2005**
(21) Application number: 04078001.7
(22) Date of filing: 01.11.2004
(51) Int. Cl.: A21B 1/10

(54) **Ventilated gas oven for food products and heat exchanger for said oven**

(30) Priority: 04.11.2003 IT MI20032120
(71) Applicant: OEM - Ali S.p.A, 20123 Milan (IT)
(72) Inventor: Berti, Luciano Achille Luigi, 20060 Bussero (Milan) (IT)
(74) Representative: De Gregori, Antonella

(57) **Abstract**

Ventilated gas oven for food products comprising a cooking chamber (12) equipped in the lower part with a feeder and/or cooking plate (13) for food products, a source that supplies the heat inside the cooking chamber (12), a motorised centrifugal fan (15) positioned near the rear wall (20) of the cooking chamber (12) as well as diffuser elements (16) for air circulation by a motorised centrifugal fan (15) and extending into the cooking chamber (12) over and below the said cooking plate (13) wherein the source that supplies the heat comprises a burner for gas or a similar fuel (101) and a heat exchanger (100, 100'), at least comprising a pipe (103) and at least one radiation body (104) positioned crosswise in the cooking chamber (12) and inserted into said pipe(103).

## Description

The present invention relates to a ventilated gas oven for food products and a heat exchanger for said oven.

A ventilated oven for the cooking and/or heating of food products, in particular for pizza and possibly other oven-baked products, such as pastry and rôtisserie products, composed of a cooking chamber equipped with an electrically or gas supplied heat source.

A ventilated oven can be composed of a tunnel type wherein one feeder for the products to be cooked is composed of a conveyor in a material such as a metal grid that crosses the cooking chamber.

Alternatively, the ventilated oven cooking chamber can, on the contrary, be closed and equipped with a fixed cooking plate underneath, for example, a plate in refractory material.

Moreover, ventilated ovens are also equipped with means for air circulation, in particular, axial or centrifugal fans, as well as air diffusion elements composed of hollow bodies that extend inside the cooking chamber over and beneath the cooking plate. The faces turned towards the cooking plate are perforated with a plurality of small circular conical and funnel-shaped holes, distributed over the total face surface. The diffuser elements formed in this manner take in air from the proximity of the motorised fan and distribute said air in the cooking chamber through the holes.

Gas supplied ovens generally introduce the hot fumes produced by gas combustion or some other similar fuels in the burner, directly into the cooking chamber.

However, this technical solution can provoke serious pollution in the product to be cooked inside the oven cooking chamber, as well as in the environment where the oven is installed. In fact, the product to be cooked is directly surrounded by the exhaust fumes that are then dispersed into the environment, especially in the case of tunnel ovens.

A further problem with ventilated ovens is that the problem concerning homogeneous heat diffusion inside the cooking chamber has not yet been satisfactorily resolved, provoking a negative influence on the quality of the cooked product as well as the energy yield of the oven.

A further problem related to ventilated ovens, and in particular, tunnel type ventilated ovens, is the heat loss towards the exterior following the metal grid conveyor action that enters and exits from the cooking chamber, and the hot air that exits from the conveyor entrance and exit openings.

The aim of the present invention is to provide a ventilated gas oven for food products, as well as a heat exchanger for said oven that will supply optimised heat distribution in the cooking chamber.

A further aim is to provide a ventilated gas oven and a heat exchanger that will avoid pollution of food products in the oven as well as pollution of the environment outside the oven, caused by combustion fumes.

Yet another aim of the present invention is to provide an efficient heat exchanger easily interchangeable with other heat exchangers having different characteristics.

Another aim is to provide a ventilated gas oven for food products and a heat exchanger for said oven that reduce cooking times as well as energy consumption.

A further aim is to provide a ventilated oven that is highly efficient, and easy to transport and install.

According to the present invention these aims are achieved with the embodiment of a ventilated gas oven for food products and a heat exchanger for said oven as defined in the independent claims.

Further characteristics are defined in the dependent claims.

The characteristics and advantages of a ventilated gas oven for food products and a heat exchanger for said oven according to the present invention will be made more clear in the following description, provided as an example but by no means limitative, with reference to the appended schematic drawings wherein:
Figures 1 and 2 show perspective views of the front and rear sides respectively, of a ventilated gas oven for food products object of the present invention;
Figure 3 is a perspective view of the rear side of the ventilated oven shown in figures 1 and 2, wherein the rear panel has been removed;
Figure 4 shows a perspective view of certain parts of the cooking chamber and the diffuser elements of the oven shown in figures 1 and 2, partially disassembled;
Figure 5 is an enlarged perspective view of a diffuser element;
Figures 6 and 7 are perspective views of a heat exchanger for a ventilated gas oven according to two different embodiments of the present invention.

In reference to said figures, the ventilated gas oven for food products, in particular a tunnel type oven is identified throughout the drawings with reference numeral 10, and also comprises a cooking chamber 12 crossed in its lower part by a conveyor feeder and cooking plate 13 for food products, a source that supplies heat to the interior of the cooking chamber 12, a motorised centrifugal fan 15, arranged in a lateral position to the cooking chamber 12, as well as air diffusion elements 16 inside the cooking chamber 12. The heat source comprises a gas burner or burner for some other similar fuel 101, and a heat exchanger 100 or 100', placed in communication with the burner 101, and in proximity to the motorised fan 15 and the cooking chamber 12.

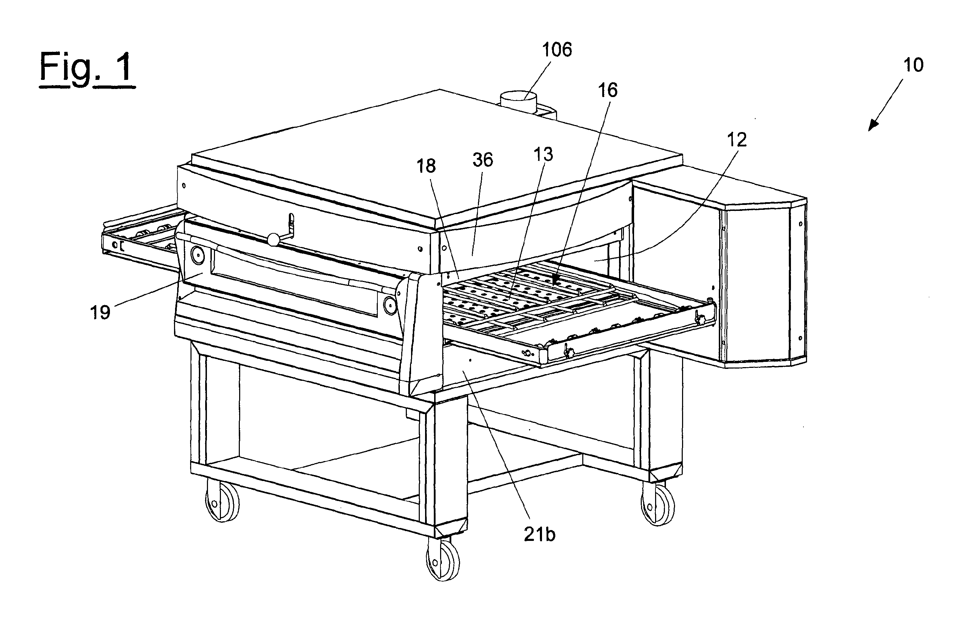

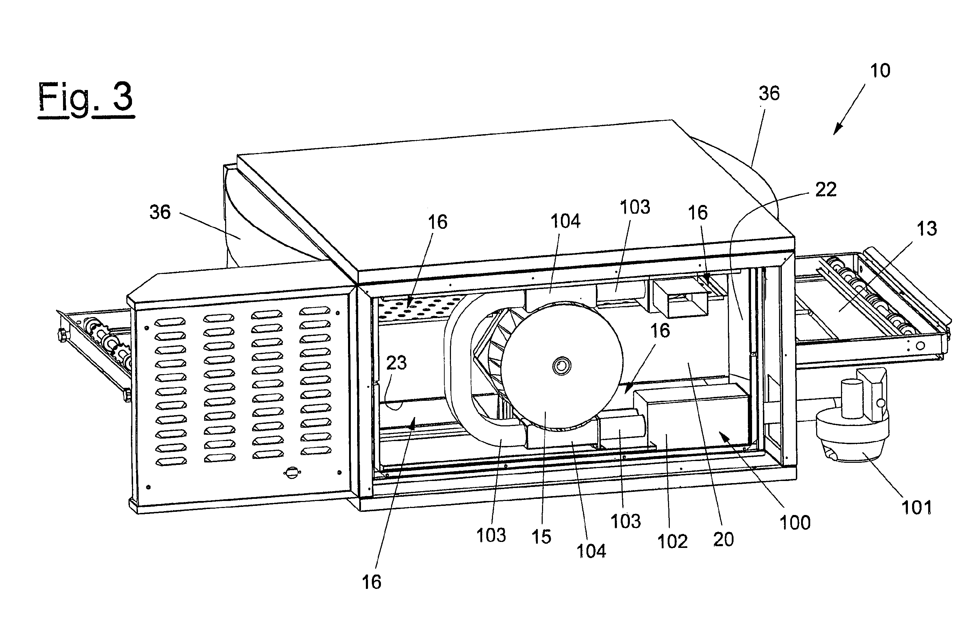

The tunnel type ventilated oven shown in figures 1 to 4, simply as an example, is equipped with a grid type conveyor that also acts as a cooking plate 13.

The cooking chamber 12 of the oven 10 comprises lower 17 and upper 18 walls, a front wall 19 that can possibly be opened, a rear wall 20, and side walls 21a, 21b, open in order to introduce the products arranged on conveyor 13. The side walls 21a and 21b can also possibly have walls that can be adjusted in height to modify the size of the openings and reduce heat dispersion.

The rear wall 20 is equipped with a plurality of openings or holes adapted to act as communication between the cooking chamber 12 and a secondary chamber 22, in which the motorised centrifugal fan 15 is housed, as well as at least part of the heat exchanger 100 or 100'.

The openings in the rear wall 20 create a supply and return route for the hot air. In fact the diffuser elements 16 are connected to the rear wall 20 at the first rectangular openings 23 which have a complementary size to the section of the diffusers 16 and which extend into the cooking chamber 12 over and beneath the cooking plate 13 as far as the front wall 19, to form the hot air supply route.

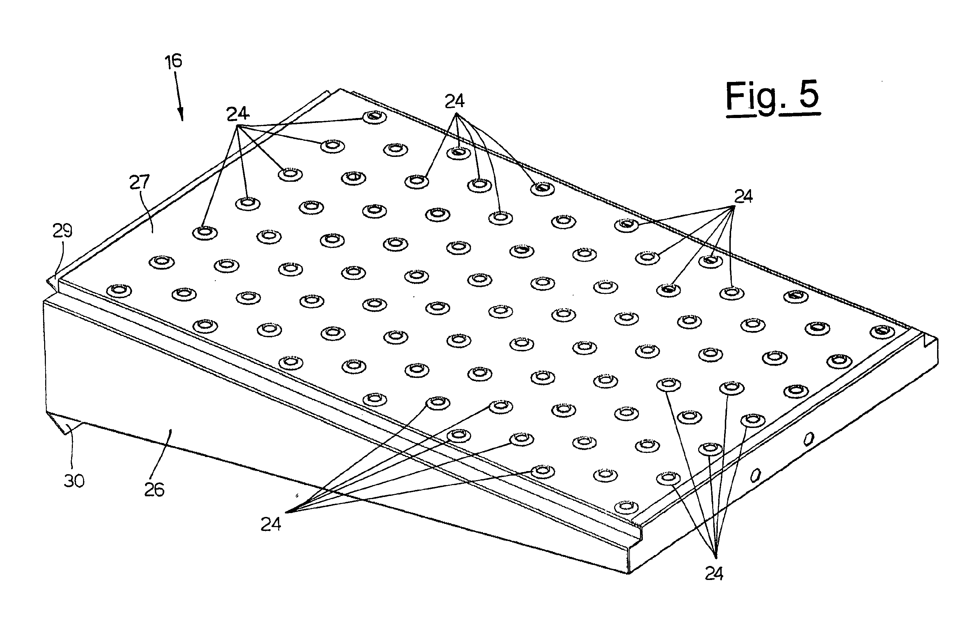

The diffuser elements 16 are composed of a hollow box-like body having a decreasing internal section 26 and a panel 27 perforated with a plurality of conical or funnel-shaped holes 24 for air distribution in chamber 12, as shown in the blow-up detail in figure 5.

The diffuser elements 16 are applied in the cooking chamber 12 using a rapid click-on/release system. Each diffuser element 16 is equipped with two fins bent towards the exterior along the larger edges facing the openings 23 respectively. A first fin 29 in proximity to panel 27 is engaged in the opening 23 of the rear wall 20, while a second fin 30 is pressure forced elastically against the upper wall 18 and the lower wall 17 of the cooking chamber 12 during diffuser 16 assembly.

At the opposite end, the diffuser element 16 is maintained in position by a flexible fixing element 31 attached to the front wall 19 of the cooking chamber 12. Using said fixing element 31, it is possible to easily slide the diffuser element 16 in and out without the need for any particular tools.

The air sent into the cooking chamber is re-conveyed back to the secondary chamber 22 through further openings in the rear wall 20. In particular this refers to two openings 33, one upper and one lower, positioned between the openings 23 for the diffuser elements 16. Said further openings 33, connect a perforated compartment 34 to the secondary chamber 22, and extend from the rear wall 20 through to the front wall 19 of the cooking chamber 12.

The holes 38, that in the figure are represented as an example on the side walls of compartment 34, provide a means of communication between the cooking chamber 12 with the interior of compartment 34, and therefore with the secondary chamber 22, in this manner creating a return route for the hot air towards the motorised fan 15.

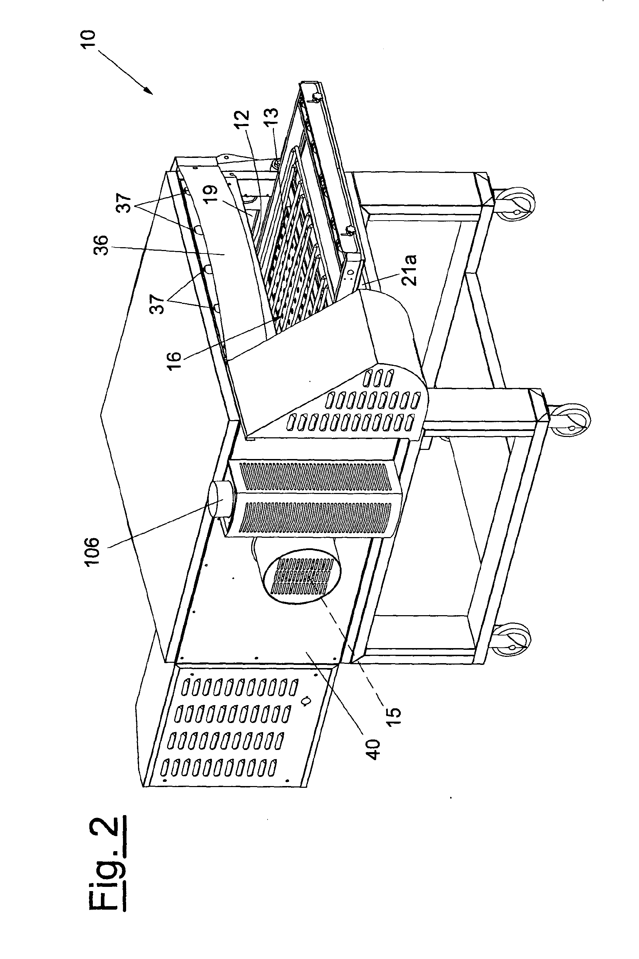

Moreover, a pipe 35 is inserted into the perforated compartment 34, to recover the hot air in proximity to the side walls 21a and 21b, equipped externally with a collector plate or hood 36, and/or possibly holes 37, as shown in a cross-section detail in figure 2, for the extraction of the air into pipe 35.

Figures 1 to 4 show a ventilated gas oven wherein the hermetically sealed heat exchanger 100, is positioned partially around fan 15 that is applied to a rear panel 40 adapted to close the secondary chamber 22 (shown in figure 2) and partially inside the cooking chamber 12.

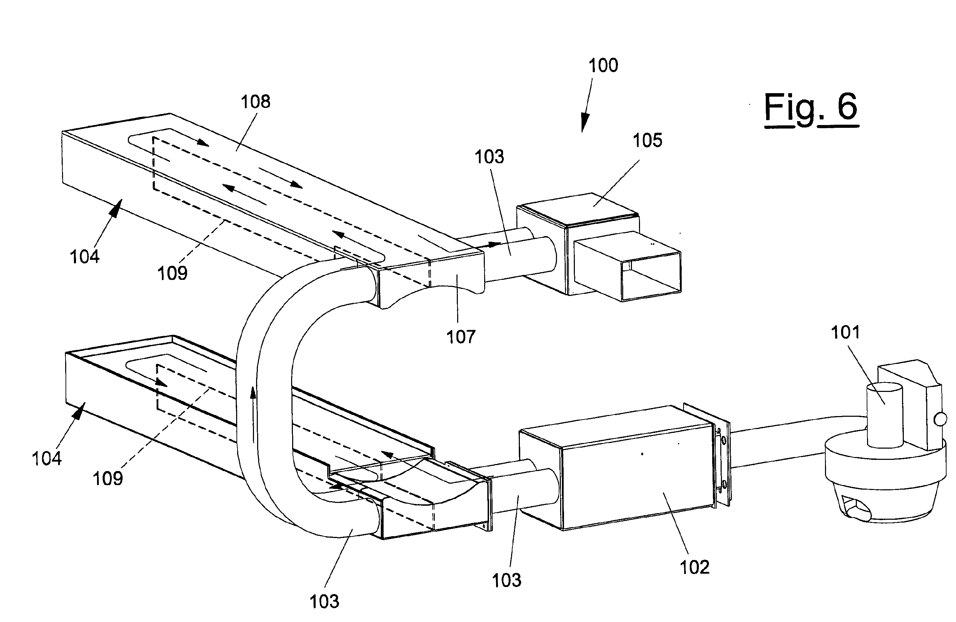

In a first embodiment shown in perspective in figure 6, the heat exchanger 100 comprises a combustion chamber 102, inserted at one end with the burner 101 and at the opposite end with the pipe 103 composed of at least one tubular element, arranged on a plane perpendicular to the motorised fan 15 axis connecting two radiating bodies 104 both to the combustion chamber 102, and comprising an upper and lower body that extend in a perpendicular manner to the pipe 103 in a direction parallel to the motorised fan axis 15, for insertion transversally into the cooking chamber 12 of the ventilated gas oven 10. Figure 6 shows the pipe 103 comprising for example, two circular section pipes positioned adjacent to each other, but which could be replaced by a single pipe with a rectangular section for example.

Lastly, pipe 103 is inserted into a fume collector chamber 105 that conveys the fumes to a flue 106 shown in figure 2.

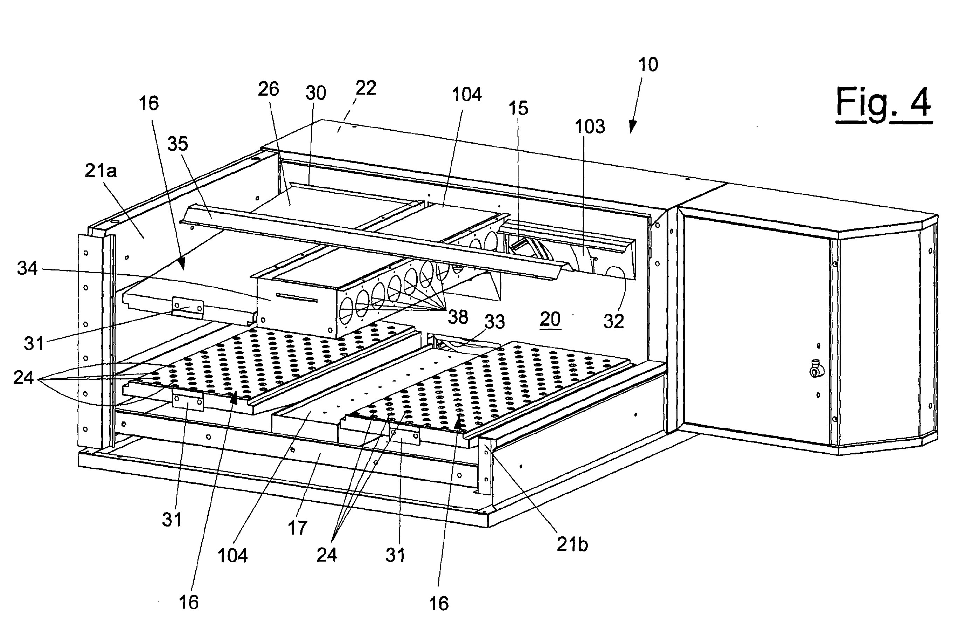

The radiating bodies 104 shown in a preferred embodiment in figure 6 comprise a first portion 107 having a concave surface on the side facing the motorised fan 15 to reduce the height volume of the heat exchanger 100. A second portion 108 of the radiating body 104 has a parallelepiped form adapted for insertion into the hollow compartment 34 that extends from the rear wall 20 of oven 10 to the front wall 19, and equipped with holes 38 for the recovery of the hot air from the cooking chamber 12. In fact, figure 4 shows the upper radiating body 104 inserted inside the perforated compartment 34, while the lower perforated compartment has been removed from the figure to show the position of the lower radiating body 104.

The radiation bodies 104 are divided internally by a dividing panel or partition 109, extending between the first portion 107 of the said body and a considerable part of the second portion 108 that divides the body 104 into two communicating channels in proximity to the end to form a forced "U-shaped" route for the fumes, as shown schematically by the arrows in figure 6.

The hot combustion fumes produced by the burner 101 in chamber 102 are sent to circulate through pipe 103 and forced to follow through a first channel of the lower radiating body 104 right through to the end in proximity to the front wall 19 of the cooking chamber 12, to then return towards pipe 103 through the channel on the opposite side. Therefore pipe 103 conveys the fumes that, having radiated heat inside the cooking chamber 12, flow towards the upper radiating body 104, that is then crossed by the fumes in the same manner as that described for the lower radiating body. After crossing the radiating body 104, the fumes are introduced into chamber 105 before evacuation through flue 106.

The radiating bodies 104 that have been crossed completely by the high temperature combustion fumes radiate heat towards the cooking chamber 12, heating the air and through radiation, also contributing to the cooking of the food products with the circulation of the hot air.

Moreover, in the ventilated gas oven 10 object of the present invention, the radiating bodies 104 are inserted inside the compartments 34 through which the hot air from the cooking chamber 12 is recovered and reconveyed to the motorised centrifugal fan 15. On the return route the air that surrounds the radiating bodies 104 at a very high temperature, extracts heat from the fumes, thus heating the air. Therefore the motorised centrifugal fan 15 sends air at an already high temperature into the cooking chamber 12, increasing the oven performance considerably.

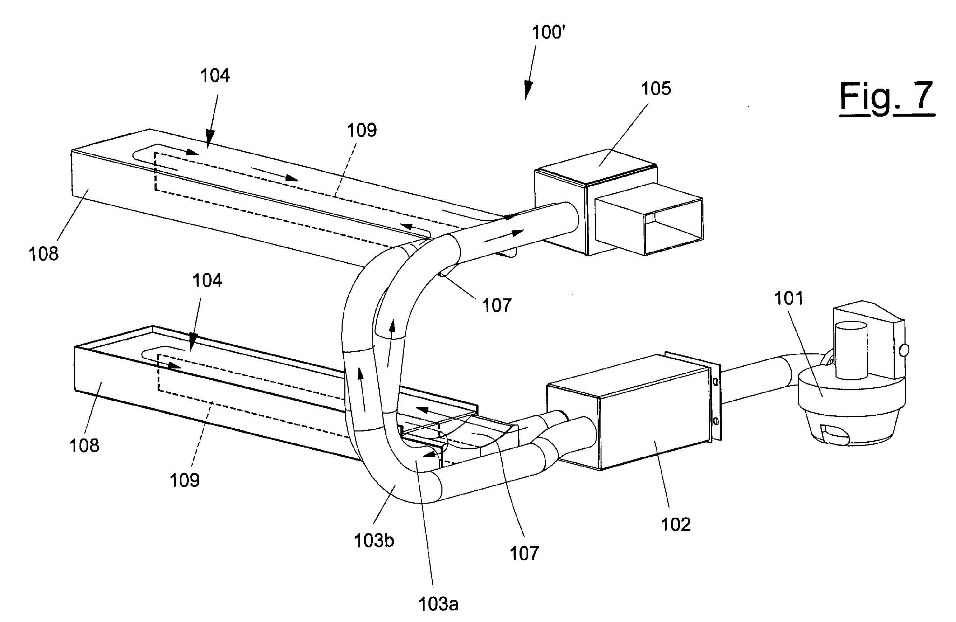

Figure 7 shows a second possible embodiment of the heat exchanger 100' object of the present invention.

In this case, the pipe 103 is composed of two independent tubes 103a and 103b, wherein a first tube 103a is connected to the lower radiation body 104, and a second tube 103b is connected to the upper radiating body 104, both tubes therefore being inserted in the exhaust fume collector chamber 105.

Combustion fume circulation occurs therefore in both radiating bodies 104, basically as previously described following through a "U-shaped" channel formed by partition 109. In this case the fumes have basically the same high temperature in both radiating bodies 104, since they arrive directly from the combustion chamber 102 and have not yet lost their heating capacity.

In this second embodiment of a heat exchanger 100' the radiation from the upper body and that from the lower body provide a considerable addition in heat for product cooking.

A further embodiment, not shown, of a heat exchanger according to the present invention, foresees the presence of a single radiating body, preferably the lower body.

The heat exchangers described as an example can be based on different types of heating and cooking of the food products with different temperature ratios between the upper wall and the bedplate, and are easily interchangeable with each other to adapt the oven to the type of product to be cooked, due to the fact that they are inserted in a manner so that they are easily removable inside the cooking chamber.

A further embodiment, (not shown) of a ventilated gas oven object of the present invention, could be equipped with a closed cooking chamber comprising a fixed cooking plate in lower position. The heating and ventilation components will be identical to those described.

A further object of the present invention is a heat exchanger as described and illustrated.

The main advantage of the ventilated gas oven for food products and the heat exchanger for said oven, object of the present invention, consists in realising the cooking action of food products through the circulation of clean hot air completely separate from the circulating hot combustion fumes which therefore do not enter into contact with the food products to be cooked.

Moreover, the products contained in the cooking chamber of the oven object of the present invention are advantageously heated both through radiation, as well as through hot air circulation.

A further advantage of the ventilated gas oven for food products and the heat exchanger for said oven according to this invention consists in the circulation of hot air in the cooking chamber that reaches every zone of the chamber in a uniform manner, and is also recovered to minimize thermal dispersion.

Moreover during the return route towards the motorised fan, the air is advantageously recalled from a hot zone, thus increasing the oven yield and consequently increasing energy saving.

The ventilated gas oven for food products and the heat exchanger for said oven according to this invention, conceived in this manner can be subject to numerous modifications and variants, while remaining within the concept of the invention; moreover all details can be replaced with technically equivalent elements. In particular the materials employed, and their dimensions can be of any type according to technical requirements.

## Claims

1. Ventilated gas oven for food products comprising a cooking chamber (12) equipped in the lower part with a feeder and/or cooking plate (13) for said food products, a source that supplies the heat inside the cooking chamber (12), a motorised centrifugal fan (15) positioned near the rear wall (20) of the cooking chamber (12) as well as diffuser elements (16) for air circulation by a motorised centrifugal fan (15) and extending into the cooking chamber (12) over and below the said cooking plate (13) said diffuser elements (16) comprising hollow box-like bodies perforated with a plurality of openings (24) distributed on the surfaces respectively facing said cooking plate (13), **characterised in that** said source that supplies the heat comprises a burner for gas or a similar fuel (101) and a heat exchanger (100, 100'), said heat exchanger at least comprising a pipe (103) for hot combustion tubes and at least one radiation body (104) positioned crosswise in the cooking chamber (12) and inserted into said pipe(103).

2. Oven according to claim 1, **characterised in that** it comprises a combustion chamber (102) inserted at one end into said burner (101) and at the other end into at least one radiating body (104) as well as a collector chamber for exhaust fumes (105) adapted to convey said fumes towards the flue. (106).

3. Oven according to claim 1, **characterised in that** said radiating body (104) has a basically parallelepiped form, and is divided internally by a separating wall or partition (109), that divides the body (104) into two communicating channels in proximity to the opposite end of the pipe (103) forming a forced route for the fumes.

4. Oven according to claim 1, **characterised in that** it comprises an upper radiating body (104) and a lower radiating body (104) connected together to said pipe (103) that comprises at least one tube.

5. Oven according to claim 1, **characterised in that** it comprises an upper radiating body (104) and a lower radiating body (104) each one being connected directly to said combustion chamber (102) through a tube (103a, 103b) for each radiating body (104) respectively.

6. Oven according to claim 1, **characterised in that** said heat exchanger (100, 100') is positioned in a manner so that it is freely removable from the interior of said chamber (12).

7. Oven according to claim 1, **characterised in that** said air diffuser elements (16) are connected to said rear wall (20) of the cooking chamber (12) by a rapid click-on/release system.

8. Oven according to claim 7, **characterised in that** said rapid click-on/release system comprises an elastic fixing element (31) attached to said front wall (19) adapted to engage with said diffuser (16) and two fins (29, 30), bent towards the exterior respectively along the main edges of said diffuser elements (16), a first fin (29) being adapted to engage in an opening (23) of said rear wall (20) and a second fin (30) being adapted to be pressed against said upper (18) and lower (17) walls of the cooking chamber (12) during assembly.

9. Oven according to claim 1, **characterised in that** it is equipped with at least one compartment (34) perforated with holes (38) for the recovery of air from the cooking chamber (12) and the conveying of said fumes to a secondary chamber (22) containing the motorised fan (15).

10. Oven according to claim 9, **characterised in that** at least one perforated compartment body (34) is lodged inside at least one radiating body (104) adapted to be surrounded by the hot air conveyed towards the secondary chamber (22).

11. Oven according to claim 1, **characterised in that** it is equipped with a pipe (35) to recover the hot air in proximity of the side walls (21a and 21b) of said cooking chamber (12) and to convey the air to the secondary chamber (22) containing said motorised fan (15).

12. Heat exchanger for a ventilated gas oven for food products **characterised in that** it comprises at least one pipe (103) for the hot combustion fumes, and at least one radiating body (104) for crosswise insertion in a cooking chamber (12) of the oven and engaged on said pipe (103).

13. Heat exchanger according to claim 12 **characterised in that** it comprises a combustion chamber (102), inserted at one end into a burner (101) and at the opposite end to said radiating body (104) as well as an exhaust fume collector chamber (105) adapted to convey said fumes to a flue (106).

14. Heat exchanger according to claim 12 **characterised in that** said radiating body (104) having a basically parallelepiped form houses a separating panel or partition (109) inside, to divide the body (104) into two communicating channels in proximity to the ends to form a forced route for the exhaust fumes.

15. Heat exchanger according to claim 12 **characterised in that** it comprises an upper radiating body (104) and a lower radiating body (104) connected both by said pipe (103) comprising at least one tube.

16. Heat exchanger according to claim 12 **characterised in that** it comprises an upper radiating body (104) and a lower radiating body (104) each one being directly connected to said combustion chamber (102) through a tube (103a and 103b) for each radiating body (104).
